Europäisches Patentamt

European Patent Office

Office européen des brevets

(19)

(11) **EP 1 288 794 A1**

(12) **EUROPEAN PATENT APPLICATION**

(43) Date of publication:
**05.03.2003 Bulletin 2003/10**

(51) Int Cl.⁷: **G06F 17/30**

(21) Application number: **01203240.5**

(22) Date of filing: **29.08.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Tarchon BV**
**1813 KV Alkmaar (NL)**

(72) Inventors:
• **Veling, Willem Anne**
  **1628 XC Hoorn (NL)**

• **van der Weide, Daniel Barak**
  **1422 KR Uithoorn (NL)**

(74) Representative:
**de Vries, Johannes Hendrik Fokke**
**De Vries & Metman**
**Overschiestraat 180**
**1062 XK Amsterdam (NL)**

(54) **Methods of ordering and of retrieving information from a corpus of documents and database system for the same**

(57)    A method of ordering information comprised in a corpus (6; 40) of documents (7; 39; 43) that comprise text comprises retrieving a count of the number of occurrences in the documents (7; 39; 43) of a first concept, retrieving a count of the number of occurrences in the corpus (6; 40) of documents (7; 39; 43) of at least one combination of the first concept and a second concept at a certain proximity to the first concept, estimating the probability of occurrence of each combination of concepts, and using the probability estimates to build a semantic network (15), comprising nodes (16-19), representing concepts, and links (20-22) between nodes (16-19), representing concept combinations.

A method of retrieving information from such a corpus (6; 40), using the number of occurrences of a search term, comprises consulting such a semantic network (15), comprising nodes (16-19), including a node representing the search term, selecting relevant concept combinations, using the link between the search term and other concepts represented in the semantic network (15), and ordering and/or grouping concept combinations according to the links (20-22) by which they are represented.

Fig. 1

EP 1 288 794 A1

**Description**

The invention relates to a method of ordering information comprised in a corpus of documents that comprise text. The invention further relates to a method of retrieving information from a corpus of documents comprising text, using the number of occurrences of a search term, and to a database system comprising a corpus of electronic documents, comprising text.

Methods and systems of the above-mentioned kind hitherto in use make use of frequency tables representing the frequency of occurrences of words and combinations of words in a corpus, relative to the total number of words and combinations. These tables are either determined dynamically, by analysing the corpus being searched, or standard tables are used. In the latter case a representative corpus of text is analysed to create a frequency table, which is then used for subsequent analyses of other corpuses of text. Of course, there is no guarantee that the corpus being analysed conforms to the frequencies laid down in the standard tables. This is especially true if the corpus being searched concerns a specialised topic, for instance if the corpus comprises legal information. The methods and systems currently used, result in a hit list of words, ordered according to their frequency.

Such methods are inefficient to use, since the addition of a document to the corpus, requires re-calculation of the entire frequency table. Additionally, the quality of the information retrieved is often poor, since certain words occur more often in a language, and certain combinations of words occur more frequently in a corpus of documents, without necessarily being relevant to the kind of information the user of the method is after. Thus, a search of the hit list needs to be carried out, wherein a human discards irrelevant results.

It is possible to use extra rules and/or filters to filter out words and word combinations that should not be returned as output of the method. For instance, rules can be used to filter out articles and conjugations of verbs like 'to be'. However, a rule needs to be formulated for each combination. It is therefore still likely that the result of the analysis comprises combinations that have escaped the filtering stage.

It is an object of the present invention to provide methods and a system of the above-mentioned kind that represent an improvement in terms of efficient sorting and retrieval of information of a high quality.

Accordingly, the method of ordering information comprised in a corpus of documents that comprise text, comprises:

- retrieving a count of the number of occurrences in the corpus of documents of a first concept;
- retrieving a count of the number of occurrences in the corpus of documents of at least one combination of the first concept and a second concept at a certain proximity to the first concept;
- estimating the probability of occurrence of each combination of concepts; and
- using the probability estimates to build a semantic network, comprising nodes, representing concepts, and links between nodes, representing concept combinations.

Thus, by calculating the probability of occurrence of each combination and building a semantic network, using this information, a more informative ordering of information is achieved. Likely combinations receive precedence over far-fetched combinations of concepts, increasing the chances that someone will be able to quickly find relevant concept combinations using the semantic network.

In a preferred embodiment of the invention, the method further comprises classifying the links into categories using the calculated probability of occurrence of each of the concept combinations to determine whether the second concept is related to, similar to, or a broader term of the first concept. This further enhances the quality of information contained in the semantic network, allowing the grouping of concepts according to the way in which they are related.

In a further preferred embodiment of the invention, the method further comprises assigning a value to each link, defining its strength. Thus, it is possible to discriminate between different links within one category, such that the most likely combinations of concepts are emphasised.

The method of retrieving information from a corpus of documents comprising text, comprises

- consulting a semantic network, comprising nodes representing concepts, including a node representing the search term, and links between the nodes;
- selecting relevant concept combinations, using the links between the search term and other concepts represented in the semantic network; and
- ordering and/or grouping concept combinations according to the links by which they are represented.

Thus a more effective way of retrieving information from the documents comprising the information a user wishes to have, is obtained. Less time needs to be spent manually sifting through the results of a query, since the information is already grouped in a meaningful way.

The database system according to the invention is capable of or adapted to carrying out a method according to any one of claims 1-10, and further comprises

- a database comprising concepts and the number of times they occur within the corpus; and
- a database comprising combinations of the concepts and the number of times they occur at a certain proximity to each other in the corpus.

This greatly improves the ease with which documents can be added to the corpus, since it is not necessary to re-calculate the frequency of occurrence of each word and combination of words within the entire corpus. Instead, the new document can be analysed, and the two databases updated. A semantic network can be generated from these tables, using the tabulated word counts, when a query is entered into the system. Once the semantic network is available, the extracted information comprised in the generated semantic network can be used in a multitude of ways, without requiring further access to the corpus of documents. Thus, analysis can be carried out once, whereby the semantic network is created or updated. A subsequent actual search for information related to a specific term, will not directly involve the documents in the corpus. No access to the corpus is required for such a search. In addition, it is not even necessary to analyse every document. Information regarding related concepts can be extracted from a sample corpus which is representative for a whole class of corpuses. A search through a corpus belonging to that class can then be carried out without an analysis of that particular corpus.

The invention will now be explained in further detail with reference to the enclosed drawings, of which

Fig. 1 shows a very schematic diagram of a configuration of computers in a network, as can be used to implement the database system according to the invention.

Fig. 2 schematically illustrates some key components used in the method according to the invention.

Fig. 3 shows a very schematic diagram illustrating the various classes into which links can be divided using the method according to the invention.

Fig. 4 shows a flow chart illustrating various actions involved in the addition of a document to the corpus of documents.

Fig. 5 illustrates schematically the analysis of a document occurring during execution of the flow chart of Fig. 4.

Fig. 6 shows a flow chart illustrating various actions taking place during the generation of a link in a semantic network.

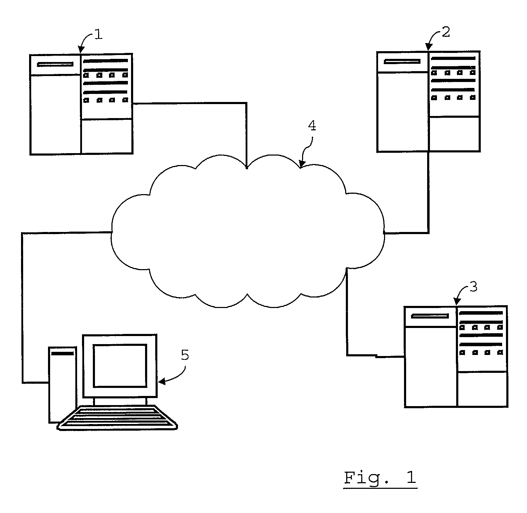

Fig. 1 is a schematic diagram illustrating a configuration suitable for implementing a database system according to the invention. A number of servers 1-3 with storage capacity, for example comprising hard disk arrays or magnetic tapes, are connected to each other through a network 4. Also connected to the network 4 is a terminal computer 5.

A first server 1 is used to store a number of electronic documents, comprising text. Using a method according to the invention, the information comprised in these documents can be analysed. To this end, a number of concepts and a count of the number of times they occur in the corpus of documents are stored in a second server 2. A number of combinations of concepts and a count of the number of occurrences of the combinations in the corpus of documents are likewise stored in the second server 2.

In the method of ordering information according to the invention, a so-called co-occurrence run is executed, in order to build a semantic network, stored on the third server 3. The semantic network comprises nodes, representing concepts, and links between nodes, representing combinations of concepts.

A user of the terminal computer 5, wishing to retrieve information from the documents in the corpus, or from one or more documents similar to those in the corpus, can enter a query using one or more search terms. Due to the existence of the semantic network, in which concepts are ordered in a highly informative manner, related concepts can quickly be retrieved and presented to the user of the terminal 5, who can then select the combinations relevant to his search.

This represents a major improvement over other methods, wherein a search for the key words has to be carried out on the first server 1, or wherein the list of word counts on the second server 2 has to be trawled for possible combinations. Because, in the preferred embodiment, the links are classified and weighted, the most likely combinations of concepts are given priority.

Using the semantic network, the system can locate the search term, determine possible related concepts and the likelihood that the combination of concepts represented by a link will be of interest to the user. The links in the semantic network of the invention group and order the combinations according to the kind of relationship between the concepts in a combination, and the probability that the relationship is true. Links are classified into one of a plurality of categories, which can be used to determine a grouping of concept combinations. Links have a value indicating their strength, which can be used to determine an ordering of the concept combinations that make up the information retrieved as a result of the search. Afterwards, the documents containing the largest number of a concept combination can be retrieved from the database, for example.

Those skilled in the art will understand that the configuration of computers of Fig. 1 is provided purely by way of example. For instance, documents, word counts and semantic network can all be stored on the first server 1. It is conceivable that the corpus of documents is distributed over a number of servers, connected to the network 4. For example, the server 1 could be symbolic for a much larger number of web servers, with the network 4 representing the Internet. In this case, servers 2, 3 storing the concept counts and semantic network could be used to provide a search engine to users of computers such as the computer terminal 5, connected to the Internet.

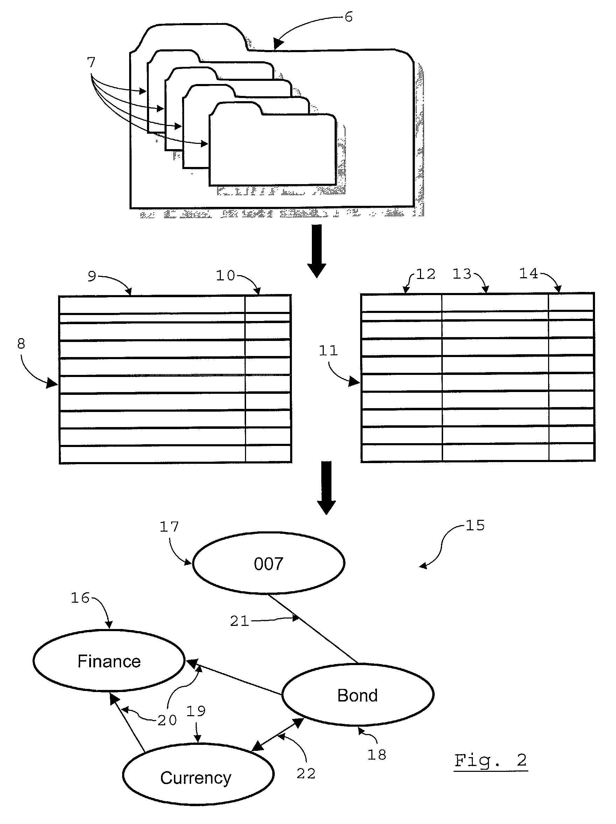

Fig. 2 is a schematic illustration of the basic objects used in the invention. A corpus 6 of documents 7 is stored in one or more databases, as explained above. Two further databases 8, 11 are maintained. A first database 8 comprises a first column 9 of concepts that occur in the documents 7. A second column 10 comprises counts of the number of occurrences of each concept in the corpus 6 of documents 7. A second database 11 comprises a column 12 of first concepts and a column 13 of second concepts. A third column 14 comprises counts of the number of occurrences of each combination of first and second concepts within a certain distance to each other in the documents 7. The manner in which the databases 8, 11 are compiled will be explained in more detail below.

The databases 8, 11 are used in the co-occurrence run to generate a semantic network 15. The semantic network 15 comprises nodes 16-19, representing concepts, and links 20-22, representing combinations of concepts. The semantic network 15 is stored in a database in a suitable format, allowing fast retrieval of a node and the neighbours to which it is linked. Thus, knowledge of relations between concepts is extracted from the corpus 6, and stored in a condensed and easily accessible form.

As part of the method according to the invention, estimates of the probability of occurrence of each combination of concepts are calculated. Each of the links 20-22 is assigned a value indicating its strength, the probability that the link is true, i.e. the probability that two concepts are indeed related to each other in some manner. Thus, the quality of information comprised in the semantic network 15 is greatly improved. In a preferred embodiment of the invention, one or more of the weakest links are discarded, thus keeping the complexity of the semantic network 15 within bounds, since the number of links 20-22 would otherwise increase dramatically with the number of nodes 16-19.

In addition, the links 20-22 are classified into categories using the calculated probabilities of occurrence of each of the concept combinations to determine whether the second concept is related to, similar to, or a broader term of the first concept. In the semantic network 15 provided by way of example in Fig. 2, the three categories of links are each represented.

Two links 20 link nodes 18, 19 to a node 16 that represents a broader term, encompassing the concepts of the first two nodes 18, 19. Accordingly, the links 20 are categorised as 'broader term'-links. The concept represented by nodes 18, 19 are meronyms of the concept of node 16. In the example of Fig. 2, 'currency' and 'bond' are both aspects of 'finance'.

A further link 21 is representative of the class 'similar', linking nodes 17, 18 representing concepts that are highly likely to be interchangeable. In this example, the concepts 'Bond' and '007' are synonyms, if 'Bond' refers to the film character.

Another link 22 is representative of the class 'related', linking nodes 18, 19 representing concepts that are neither broader terms of each other or synonyms, but are still likely to occur in the same context. In this example, 'Bond' and 'currency', being both aspects of 'finance' are likely to occur in the same context. However, they are neither synonyms nor meronyms of one another.

As can be seen, the node 17 representing '007' is only linked to the node 18, representing 'Bond', but not to the other nodes 16, 19. Because the concept represented by node 17 is highly unlikely to occur in the same context as those represented by these other two nodes 16, 19, no link is provided between them in the semantic network 15. The link between the concepts has been judged as too weak.

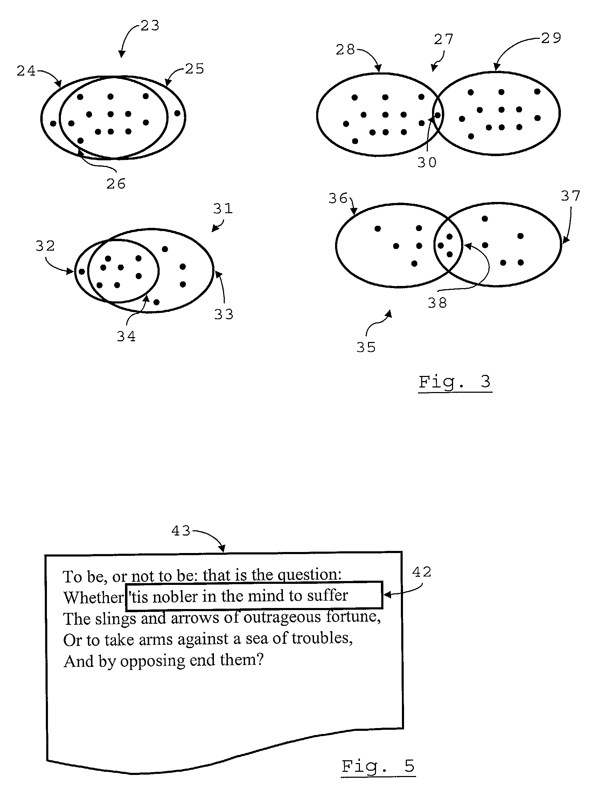

Fig. 3 shows four Venn-diagrams illustrating the different possible links between concepts. Each of the diagrams symbolises two sets, each symbolising a concept. A dot symbolises an occurrence in the corpus of documents. A dot in the area of overlap symbolises the occurrence of both concepts at a certain proximity to each other in a document in the corpus, i.e. at a distance to each other smaller than a certain limit. The area of each of the sets and of the intersection corresponds to the number of occurrences in the corpus of documents.

A first diagram 23 depicts a situation wherein two concepts are similar. A set 24 associated with a first concept and a set 25 associated with a second concept have an intersection 26 with a large area relative to the area of the union of the two sets 24, 25.

In contrast, a second diagram 27 shows two sets 28, 29, each associated with a concept, that have an intersection 30 with a small area relative to the area of the union of the two sets 28, 29. The link between these concepts is thus very weak, and they can be classified as unrelated.

In a third diagram 31, a set 32 associated with a first concept is almost completely a subset of a set 33 associated with a second concept. The area of the intersection 34 of the two sets is large relative to the area of the first set 32, but not very large relative to the area of the second set 33. The concept associated with the second set 33 can be classified as a broader term of the concept associated with the first set 32.

In a last diagram 35, the link between the concepts associated with first and second sets 36 and 37, respectively, is classified as related. The area of the intersection 38 of the two sets 36, 37 is not very large relative to either that of the first set 36 or of the second set 37, but not so small, that the link between the two concepts should be classified as unrelated.

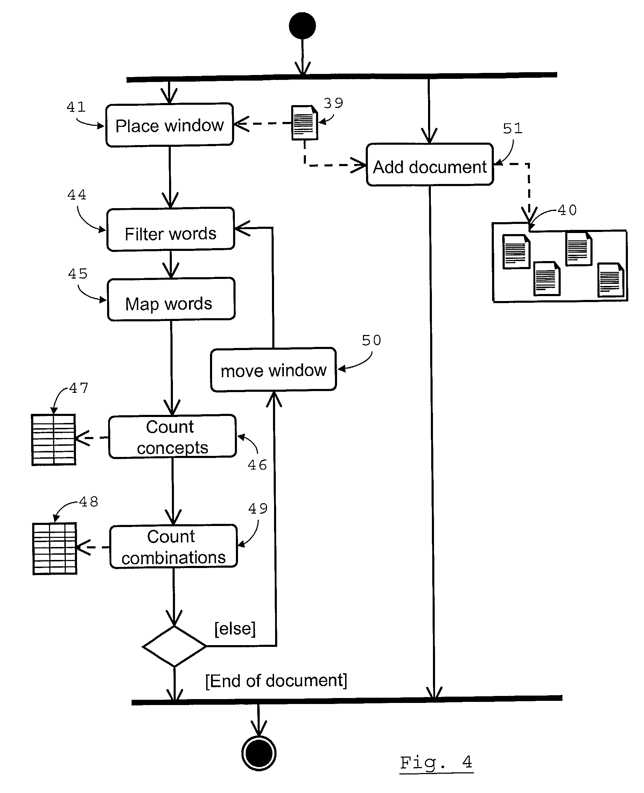

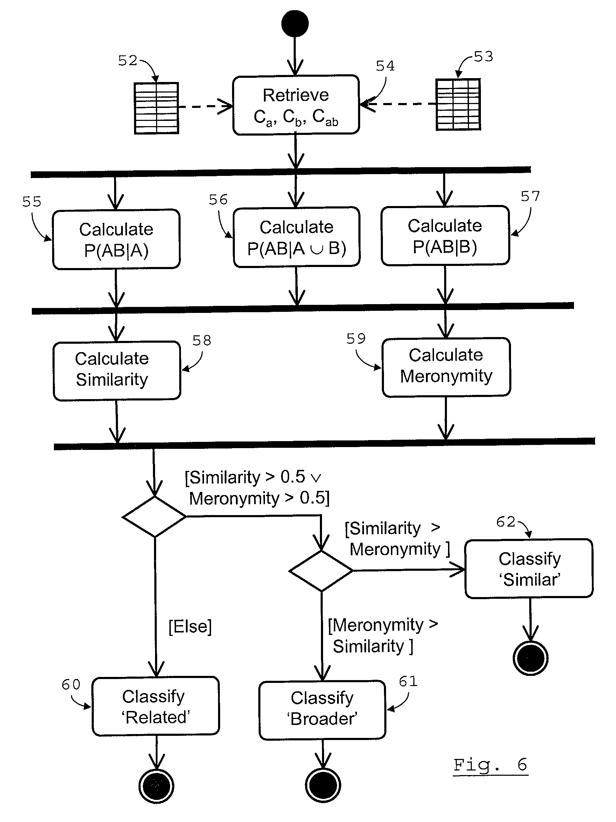

Turning now to Fig. 4, a flow chart is presented, showing, in conjunction with Fig. 5, the addition of a new document 39 to a corpus 40 of documents. Referring also to Fig. 5, a first step 41 comprises placing a window 42 at a starting point in a document 43. The window 42 embraces a certain set number of words in the text of the document 39; 43. Although there is no prescribed number, it is noted that there are preferred window sizes, related to the language of the document in question. Depending on such things as the average sentence and paragraph length, a preferred window size can be determined. This window size is the size whereby the chances of two concepts occurring in a window of this size being related are highest. A key advantage of the present invention is that it is predominantly statistic. Although linguistic knowledge can be used to determine an optimal window size, the method will still function very well without any such knowledge. This is in marked contrast to rules-based systems and systems using filters, wherein rules specific to the language in question have to be used.

When two words occur at a certain proximity to each other, i.e. are embraced by the window 42, the concepts to which these words refer are judged to form a combination. Thus, it is not necessary for two words to follow at a set distance. The decisive factor is whether they occur together in an interval defined by the window 42.

A non-essential, but highly desirable, step 44 comprises filtering out words that are not representative of relevant concepts. For example, articles can be filtered out. Different conjugations of verbs, and plurals and genitives of nouns can be mapped to one common concept in a step 45. This decreases the number of concepts and increases the quality of results from later analyses. Again, this step can only be used when knowledge of the languages of the corpus is available. If this is not the case, the method will still function very well without the filtering step 44, as the invention is in essence language-independent.

A subsequent step 46 consists of updating a concept count database 47, by counting the occurrence of each concept in the window 42. The database 47 contains the total concept count in the entire corpus 40 of documents.

A concept combination count database 48 is updated in a next, or parallel, step 49. The count of the number of occurrences of a certain combination of concepts is, as the skilled person will understand, carried out in such a way as to avoid double counts.

Subsequently, the window 42 is moved to the next position in the document 43 unless the end of the document 43 has been reached, in which case the addition of this document 43 to the corpus 40 of documents has been completed. Otherwise the process of counting concepts and concept combinations will be repeated for the new window position. Of course, concepts and combinations already contained and counted in a previous window position are only counted once.

Where a corpus of documents with associated concept and concept combination count databases has been assembled in this way, a co-occurrence run can be executed, using the invention, to build a semantic network. This process is schematically shown in Fig. 6, wherein the classification and strength of a link between two concepts, a and b, is illustrated.

Counts $C_a$, $C_b$ of the number of occurrences of concepts a and b in the corpus of documents are retrieved from a concept count database 52. A count $C_{ab}$ of the number of occurrences of the combination of the two concepts at a certain proximity to each other - i.e. in a window of a certain size - in the documents of the corpus, is retrieved from a concept combination count database 53.

Subsequently, estimates of three probabilities are calculated:

a. An estimate of the probability of occurrence of the combination of a and b relative to the occurrence of concept a, P(AB|A). More precisely stated, this is an estimate of the probability of finding concept b in a window containing concept a:

$$R_a = \frac{C_{ab}}{C_a} \; .$$

b. An estimate of the probability of occurrence of the combination of a and b relative to the occurrence of concept b, P(AB|B). This estimate of finding concept a in a window containing concept b is calculated as:

$$R_b = \frac{C_{ab}}{C_b} \; .$$

c. An estimate of the probability of occurrence of the combination of a and b relative to the occurrence of either or both of the concepts a and b, P(AB|A∪B). This estimate indicates the probability of finding the combination of concepts when either one of the two concepts is present in a window:

$$R_{ab} = \frac{C_{ab}}{C_a + C_b - C_{ab}} \ .$$

The thus calculated value of $R_{ab}$ is the strength assigned to the link.

Each of the estimates $R_a$, $R_b$, $R_{ab}$ has a value between 0 and 1.

In two further steps, 58, 59, numerical estimates of the degree of similarity and meronymity, respectively, of the first and second concept are calculated.

The similarity is defined as:

$$S(a,b) = Avg(R_a,R_b,R_{ab}) \cdot (1 - \left| Max(R_a,R_b,R_{ab}) - Avg(R_a,R_b,R_{ab}) \right| ).$$

Referring back to Fig. 3, S(a,b) will be greatest for similar links, corresponding to the diagram 23 for synonymous concepts, corresponding to a situation where the areas of the first 24 and second 25 set and of the intersection 26 are almost equal.

The meronymity is defined as:

$$M(a,b) = \left| Max(R_a,R_b) - \left| Min(R_a,R_b) - R_{ab} \right| \right| \ .$$

The meronymity is a measure of how much the relationship between two concepts corresponds to that of diagram 31 in Fig. 3. Where the area of intersection 34 is large relative to the area of the set 32 associated with the first concept, but small relative to the area of the set 33 of the second concept, the value of the meronymity will be large.

Using the calculated values M(a,b), S(a,b), the link between concepts a and b is classified as 'related', 'broader term' or 'similar'. If none of the categories is applicable, the two concepts are unrelated, and no link is created.

The process of Fig. 6 is repeated for all combinations of concepts. The semantic network is then built from the nodes and links, whereby there is a maximum number of links per node and a maximum number of links per category. For example, there can be a maximum of ten links connected to each node, with a maximum of 3 'similar' links and three 'broader term' links. Where more links are possible than the allowed maximum, the weakest links are discarded.

Using the semantic network so created, more effective searches for information in the corpus of documents can be carried out. By presenting concepts in relation to each other, classifying the relationships between concepts and indicating the strength of the link between concepts, the information can be ordered. Navigation through a large amount of information becomes a lot easier.

It is further noted, that the corpus 40 of documents, and the semantic network generated from it can be a representative example for a whole class of documents. For example, one could generate a semantic network using a sample group of articles from a scientific medical journal. A semantic network generated in this fashion incorporates knowledge about which concepts used in the medical literature are likely to be related and the strength and type of relation between concepts. Using this semantic network, later scientific papers in the medical field can be searched for a particular concepts and related concepts, using the semantic network, without actually having to generate a new semantic network, or analyse the later paper.

It will be apparent to those skilled in the art that the invention is not limited to the above-described embodiments, which can be varied in a number of ways within the scope of the attached claims. For instance, the invention is not limited exclusively to use with documents in electronic format. Archiving systems are conceivable, wherein the text comprised in a paper document is analysed, the data entered electronically, and a co-occurrence run used to analyse information in a corpus of documents processed in this way. This could be an invaluable aid to librarians.

**Claims**

1.  Method of ordering information comprised in a corpus (6; 40) of documents (7; 39; 43) that comprise text, comprising:

    -   retrieving a count of the number of occurrences in the corpus (6; 40) of documents (7; 39; 43) of a first concept;
    -   retrieving a count of the number of occurrences in the corpus (6; 40) of documents (7; 39; 43) of at least one combination of the first concept and a second concept at a certain proximity to the first concept;
- estimating the probability of occurrence of each combination of concepts; and
- using the probability estimates to build a semantic network (15), comprising nodes (16-19), representing concepts, and links (20-22) between nodes (16-19), representing concept combinations.

2. Method according to claim 1, wherein estimating probabilities comprises calculating for each combination of concepts estimates of the probability of occurrence of the combination relative to the occurrence of each of the concepts and of the probability of occurrence of the concept combination relative to the occurrence of either or both of the concepts in the corpus (6; 40) of documents (7; 39; 43).

3. Method according to claim 1 or 2, further comprising classifying the links (20-22) into categories, using the calculated probability of occurrence of each of the concept combinations to determine whether the second concept is related to, similar to, or a broader term of the first concept.

4. Method according to claim 3, further comprising calculating a numerical estimate of the degree of similarity between the first and second concept.

5. Method according to claim 3 or 4, further comprising calculating a numerical estimate of the degree of meronymity of the first and second concept.

6. Method according to any one of the preceding claims, further comprising assigning a value to each link (20-22), defining its strength.

7. Method according to claim 6, wherein, in building the semantic network (15), one or more of the weakest links (20-22) are discarded.

8. Method of retrieving information from a corpus (6; 40) of documents (7; 39; 43) comprising text, using the number of occurrences of a search term, comprising: consulting a semantic network (15), comprising nodes (16-19) representing concepts, including a node representing the search term, and links (20-22) between the nodes (16-19); selecting relevant concept combinations, using the links (20-22) between the search term and other concepts represented in the semantic network (15); and ordering and/or grouping concept combinations according to the links (20-22) by which they are represented.

9. Method according to claim 8, wherein links (20-22) have been classified into one of a plurality of categories, and the classification are used in determining the grouping.

10. Method according to claim 8 or 9, wherein a link (20-22) has a value indicating its strength, and the strengths are used in determining the ordering.

11. Database system comprising a corpus (6; 40) of electronic documents (7; 39; 43), comprising text, wherein the system is capable of or adapted to carrying out a method according to any one of claims 1-10, and wherein the system further comprises

- a database (8; 47; 52) comprising concepts and the number of times they occur within the corpus (6; 40); and
- a database (11; 48; 53) comprising combinations of the concepts and the number of times they occur at a certain proximity to each other in the corpus (6; 40).

12. Computer program code, suitable for loading onto a computer, such that the computer, when programmed in this way, is capable of, or adapted to carrying out a method according to any one of claims 1-7 or 8-10.

13. Computer program product, comprising a computer readable medium, having thereon computer program code means, when said programs is loaded, to make the computer execute a method according to any one of claims 1-7 or 8-10.

Fig. 1

Fig. 2

Fig. 3

To be, or not to be: that is the question:
Whether 'tis nobler in the mind to suffer
The slings and arrows of outrageous fortune,
Or to take arms against a sea of troubles,
And by opposing end them?

Fig. 5

Fig. 4

52

53

54

Retrieve
$C_a$, $C_b$, $C_{ab}$

55

56

57

Calculate
$P(AB|A)$

Calculate
$P(AB|A \cup B)$

Calculate
$P(AB|B)$

58

59

Calculate
Similarity

Calculate
Meronymity

[Similarity > 0.5 $\vee$
Meronymity > 0.5]

[Similarity >
Meronymity ]

62

Classify
'Similar'

[Else]

[Meronymity >
Similarity ]

60

61

Classify
'Related'

Classify
'Broader'

Fig. 6

**European Patent Office**

## EUROPEAN SEARCH REPORT

Application Number

EP 01 20 3240

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PARK Y C ET AL: "Automatic thesaurus construction using Bayesian networks" PROCEEDINGS OF THE 1995 ACM CIKM INTERNATIONAL CONFERENCE ON INFORMATION AND KNOWLEDGE MANAGEMENT, PROCEEDINGS OF CIKM '95: CONFERENCE ON INFORMATION AND KNOWLEDGE MANAGEMENT, BALTIMORE, MD, USA, 28 NOV.-2 DEC. 1995, pages 212-217, XP000624372 1995, New York, NY, USA, ACM, USA ISBN: 0-89791-812-6 * page 543, line 1 - page 544, line 24 * * page 546, paragraph 3 - page 547, paragraph 1 * * page 550 - page 551 * | 1,6-13 | G06F17/30 |
| X | CHI YUEN NG ET AL: "Efficient algorithms for concept space construction" ADVANCES IN KNOWLEDGE DISCOVERY AND DATA MINING. 5TH PACIFIC-ASIA CONFERENCE, PAKDD 2001. PROCEEDINGS (LECTURE NOTES IN ARTIFICIAL INTELLIGENCE VOL.2035), ADVANCES IN KNOWLEDGE DISCOVERY AND DATA MINING. 5TH PACIFIC-ASIA CONFERENCE, PAKDD 2001, HONG , pages 90-101, XP002202987 2001, Berlin, Germany, Springer-Verlag, Germany ISBN: 3-540-41910-1 * page 90, line 1 - page 91 * * page 92 * * page 95, paragraph 1 * | 1,6-13 | |
| A | EP 0 687 987 A (XEROX CORP) 20 December 1995 (1995-12-20) * page 4, line 1 - line 27 * * claims 1-10 * | 1-13 | |

**TECHNICAL FIELDS SEARCHED (Int.Cl.7)**

G06F

---/---

The present search report has been drawn up for all claims

| Place of search | Date of completion of the search | Examiner |
|---|---|---|
| THE HAGUE | 24 June 2002 | Plak, M |

**European Patent Office**

**EUROPEAN SEARCH REPORT**

Application Number

EP 01 20 3240

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 926 811 A (HOLT JOHN DAVID ET AL) 20 July 1999 (1999-07-20) * column 1, line 45 - column 2, line 35 * * claims 1-19 * | 1-13 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 24 June 2002 | Plak, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                  EP 01 20 3240

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2002

| Patent document cited in search report | | Publication date | Patent family member(s) | | Publication date |
|---|---|---|---|---|---|
| EP 0687987 | A | 20-12-1995 | US | 5675819 A | 07-10-1997 |
| | | | EP | 0687987 A1 | 20-12-1995 |
| | | | JP | 8006971 A | 12-01-1996 |
| US 5926811 | A | 20-07-1999 | AU | 2060997 A | 01-10-1997 |
| | | | CA | 2248793 A1 | 18-09-1997 |
| | | | EP | 0901660 A1 | 17-03-1999 |
| | | | WO | 9734242 A1 | 18-09-1997 |